(19) 

**Europäisches Patentamt**
**European Patent Office**
**Office européen des brevets**

(11) **EP 2 472 233 A1**

(12) **EUROPEAN PATENT APPLICATION**
published in accordance with Art. 153(4) EPC

(43) Date of publication:
04.07.2012 Bulletin 2012/27

(51) Int Cl.:
*G01D 5/244* (2006.01)

(21) Application number: **10811781.3**

(22) Date of filing: **20.08.2010**

(86) International application number:
**PCT/JP2010/064105**

(87) International publication number:
**WO 2011/024731 (03.03.2011 Gazette 2011/09)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **26.08.2009 JP 2009195190**
**26.08.2009 JP 2009195191**
**23.07.2010 JP 2010166122**

(71) Applicant: **JTEKT Corporation**
**Osaka-shi**
**Osaka 542-8502 (JP)**

(72) Inventor: **UEDA, Takeshi**
**Osaka-shi**
**Osaka 542-8502 (JP)**

(74) Representative: **TBK**
**Bavariaring 4-6**
**80336 München (DE)**

(54) **DEVICE FOR DETECTING ANGLE OF ROTATION**

(57)     A first rotation angle computing unit 21 computes a first rotation angle $\theta_1$ corresponding to a rotation angle of a rotor 1 based on an output signal V1 of a first magnetic sensor 11 and an output signal V2 of a second magnetic sensor 12. A second rotation angle computing unit 22 computes a second rotation angle $\theta_2$ corresponding to the rotation angle of the rotor 1 based on the output signal V2 of the second magnetic sensor 12 and an output signal V3 of a third magnetic sensor 13. A rotation angle selection unit 23 determines a final rotation angle $\theta$ using the first rotation angle $\theta_1$ and the second rotation angle $\theta_2$.

FIG. 1

EP 2 472 233 A1

**Description**

Technical Field

The present invention relates to a rotation angle detection device that detects a rotation angle of a rotating body.

Background Art

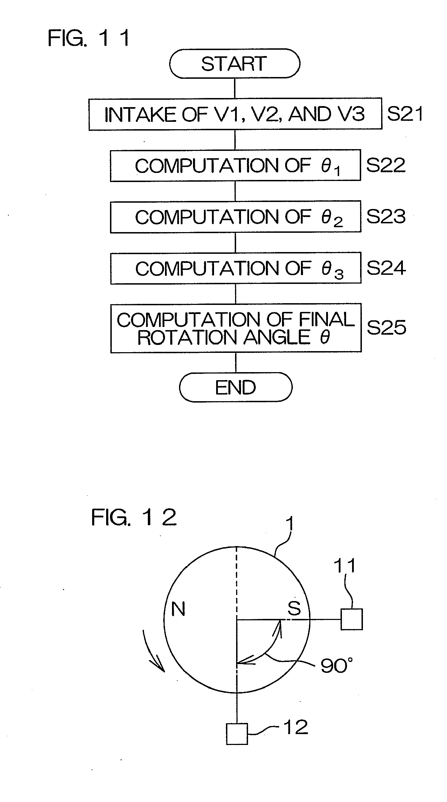

A brushless motor used in an electric power steering apparatus, etc., is controlled by supplying an electric current to a stator coil in accordance with a rotation angle of a rotor. There is thus known a rotation angle detection device such as that shown in FIG. 12. The rotation angle detection device has a rotor 1, which includes a magnet having two magnetic poles N and S, and two magnetic sensors 11 and 12 disposed at an angular interval of 90° centered about a central rotation axis of the rotor 1. The respective magnetic sensors 11 and 12 output sinusoidal signals with a 90° phase difference with respect to each other. The rotation angle detection device detects the rotation angle of the rotor 1 based on the two sinusoidal signals.

The direction indicated by the arrow in FIG. 12 shall be deemed to be a positive rotation direction of the rotor 1. It shall also be deemed that the rotation angle of the rotor 1 increases when the rotor 1 is rotated in the positive direction, and the rotation angle of the rotor 1 decreases when the rotor 1 is rotated in the opposite direction. If, with respect to the rotation angle $\theta$ of the rotor 1, an output signal V1 of V1=A1·sin $\theta$, is output from one magnetic sensor 11, an output signal V2 of V2=A2·sin($\theta$+90°)=A2·cos $\theta$ is output from the other magnetic sensor 12. A1 and A2 respectively express amplitudes.

If the amplitudes A1 and A2 are deemed to be mutually equal to a value A or both signals V1 and V2 are normalized so that both amplitudes are of a certain predefined value A, one output signal V1 is expressed as V1=A·sin $\theta$ and the other output signal V2 is expressed as V2=A·cos $\theta$. Further, if A=1, the one output signal V1 is expressed as V1=sin $\theta$ and the other output signal V2 is expressed as V2=cos $\theta$. Here, to simplify the description, the output signals V1 and V2 of the magnetic sensors 11 and 12 shall be expressed as V1=sin $\theta$ and V2=sin($\theta$+90°)=cos $\theta$.

The rotation angle $\theta$ of the rotor can be determined using both output signals V1 and V2 based, for example, on the following Formula (1).

$$\begin{aligned}\theta &= \tan^{-1}\left(\sin\theta/\cos\theta\right)\\ &= \tan^{-1}\left(\sin\theta/\sin\left(\theta+90^{\circ}\right)\right) \quad \ldots \quad (1)\\ &= \tan^{-1}\left(V1/V2\right)\end{aligned}$$

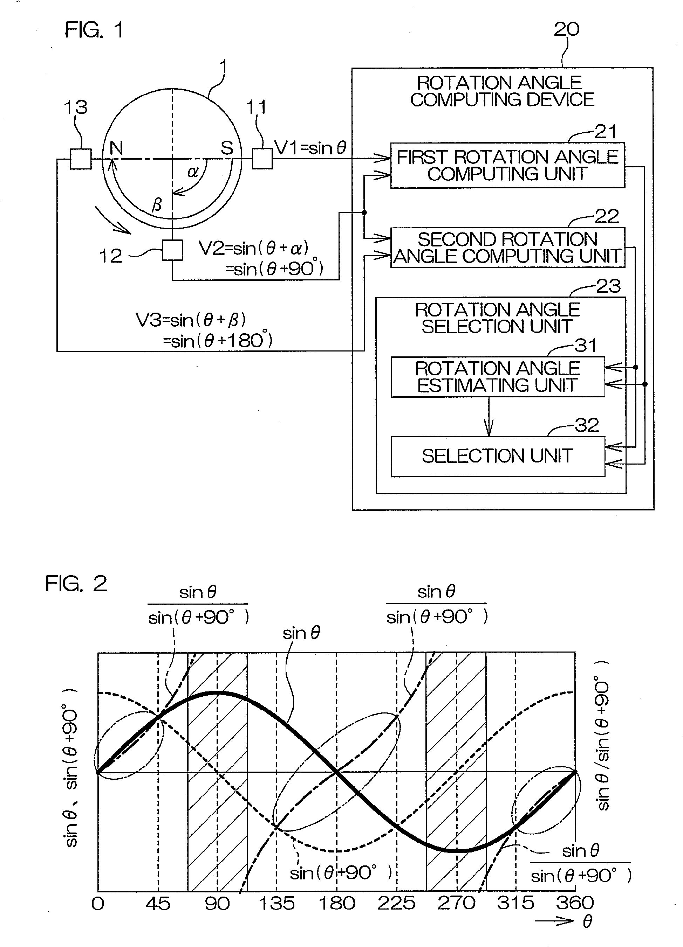

FIG. 2 shows variations of the output signals V1 (=sin $\theta$) and V2 (=sin($\theta$+90°)) of the magnetic sensors 11 and 12 and sin $\theta$/sin($\theta$+90°) at the right-hand side of Formula (1), with respect to the rotation angle $\theta$ of the rotor 1.

Citation List

Patent Literature

Patent Document 1: Japanese Published Unexamined Patent Application No. 2001-324321
Patent Document 2: Japanese Published Unexamined Patent Application No. 2004-156961
Patent Document 3: Japanese Published Unexamined Patent Application No. 2008-241411
Patent Document 4: Japanese Published Unexamined Utility Model Application No. Hei 5-55022
Patent Document 5: Japanese Published Unexamined Patent Application No. 2002-213944
Patent Document 6: Japanese Translation of International Application (Kohyo) No. Hei 9-508214

Summary of Invention

Technical Problem

With the conventional rotation angle detection device described above, when, in computing the rotation angle $\theta$ of the rotor 1 based on Formula (1), cos $\theta$, which is a denominator in sin $\theta$/cos $\theta$, approaches zero, computation error increases. Thus, in a case where the rotor angle is in a range near 90° or in a range near 270° as indicated by slanted line portions in FIG. 2, cos θ (=sin(θ+90°)) is low in absolute value and the error of the rotation angle θ computed based on tan$^{-1}$ (sin θ/cos θ) is high.

Thus, an obj ect of the present invention is to provide a rotation angle detection device that can be improved in detection precision.

Also, with the conventional rotation angle detection device described above, detection error may arise due to influence of noise included in the output signals of the magnetic sensors. To reduce such detection error, determination of a final rotation angle by averaging the rotation angle, detected based on the output signals of the magnetic sensors, in a time direction may be considered. However, in this case, response of rotation angle detection becomes poor when the rotor is rotating at high speed.

Thus, an obj ect of the present invention is to provide a rotation angle detection device with which detection error due to influence of noise can be reduced while maintaining high response.

Solution to Problem

A first rotation angle detection device according to the present invention is a rotation angle detection device (20 or 70) that includes first, second, and third sensors (11 to 13 or 61 to 63) respectively outputting first, second, and third sinusoidal signals, that have phase differences with respect to each other, in accordance with rotation of a rotating body (1), detects a rotation angle of the rotating body based on the output signals of the sensors, and further includes a rotation angle computing unit (21, 22, or 71 to 73), that, for each combination of two or more combinations among a combination of the first sinusoidal signal and the second sinusoidal signal, a combination of the first sinusoidal signal and the third sinusoidal signal, and a combination of the second sinusoidal signal and the third sinusoidal signal, computes a rotation angle corresponding to the rotation angle of the rotating body based on the two sinusoidal signals included in the combination, and a final rotation angle computing unit (23 and 74) computing a final rotation angle using a plurality of rotation angles computed by the rotation angle computing unit. The alphanumeric characters in parenthesis in this section indicate corresponding components, etc., in preferred embodiments to be described later. However, this is not intended to mean that the present invention should be interpreted as being limited to the preferred embodiments.

With a rotation angle computed from two sinusoidal signals having a phase difference with respect to each other, there is a rotation angle range in which computation error is large due to a computation formula used for the computation of the rotation angle. The plurality of rotation angles computed by the rotation angle computing unit are computed from different combinations of sinusoidal signals and thus differ in the computation formula by which these are computed. The rotation angle ranges in which the computation error is large thus differ among the plurality of rotation angles. By the above arrangement, a rotation angle of low computation error can be computed using the plurality of rotation angles. Detection precision of the rotation angle can thus be improved.

Also, by the above arrangement, the final rotation angle is computed based on the plurality of rotation angles computed by the rotation angle computing unit and detection error due to influence of noise included in the output signals of the sensors can thus be reduced.

In a preferred embodiment of the present invention, the rotation angle computing unit includes a first rotation angle computing unit (21) computing a first rotation angle corresponding to the rotation angle of the rotating body based on the first sinusoidal signal and the second sinusoidal signal and a second rotation angle computing unit (22) computing a second rotation angle corresponding to the rotation angle of the rotating body based on the second sinusoidal signal and the third sinusoidal signal. The final rotation angle computing unit computes the final rotation angle using the first rotation angle and the second rotation angle.

With this arrangement, the first rotation angle corresponding to the rotation angle of the rotating body is computed based on the first sinusoidal signal and the second sinusoidal signal. Also, the second rotation angle corresponding to the rotation angle of the rotating body is computed based on the second sinusoidal signal and the third sinusoidal signal. The final rotation angle is then computed using the first rotation angle and the second rotation angle.

With a rotation angle computed from two sinusoidal signals having a phase difference with respect to each other, there is a rotation angle range in which computation error is large due to a computation formula used for the computation of the rotation angle. The first rotation angle is computed from the first sinusoidal signal and the second sinusoidal signal, the second rotation angle is computed from the second sinusoidal signal and the third sinusoidal signal, and the rotation angles are thus computed using different computation formulae. The first rotation angle and the second rotation angle thus differ in the rotation angle range in which the computation error is large. By the above arrangement, a rotation angle of low computation error can be computed using the first rotation angle and the second rotation angle. The detection precision of the rotation angle can thus be improved.

In a preferred embodiment of the present invention, the final rotation angle computing unit includes a rotation angle estimating unit (31) estimating the rotation angle of the rotating body and a computing unit (32) computing the final rotation angle using the first rotation angle and the second rotation angle in accordance with a rotation angle estimation value estimated by the rotation angle estimating unit.

The computing unit (32) may select a rotation angle of smaller computation error between the first rotation angle and the second rotation angle as a final rotation angle in accordance with the rotation angle estimation value estimated by the rotation angle estimating unit. Or, the computing unit may determine the final rotation angle by adding the first rotation angle and the second rotation angle upon applying weights respectively in accordance with the rotation angle estimation value estimated by the rotation angle estimating unit.

The rotation angle estimating unit (31) may compute an average value of the first rotation angle and the second rotation angle as the rotation angle estimation value. Or, for example, the first rotation angle or the second rotation angle, etc., may be used as the rotation angle estimation value. Or, after one of either the first rotation angle or the second rotation angle has first been selected as the final rotation angle, the currently selected first or second rotation angle may be used as the rotation angle estimation value. Further, after the final rotation angle has been computed first, the previously computed final rotation angle may be used as a current rotation angle estimation value.

In a preferred embodiment of the present invention, the rotation angle computing unit includes a first rotation angle computing unit (71) computing a first rotation angle corresponding to the rotation angle of the rotating body based on the first sinusoidal signal and the second sinusoidal signal, a second rotation angle computing unit (72) computing a second rotation angle corresponding to the rotation angle of the rotating body based on the first sinusoidal signal and the third sinusoidal signal, and a third rotation angle computing unit (73) computing a third rotation angle corresponding to the rotation angle of the rotating body based on the second sinusoidal signal and the third sinusoidal signal. The final rotation angle computing unit computes the final rotation angle based on the first, second, and third rotation angles.

With this arrangement, the first rotation angle corresponding to the rotation angle of the rotating body is computed based on the first sinusoidal signal and the second sinusoidal signal. Also, the second rotation angle corresponding to the rotation angle of the rotating body is computed based on the first sinusoidal signal and the third sinusoidal signal. Also, the third rotation angle corresponding to the rotation angle of the rotating body is computed based on the second sinusoidal signal and the third sinusoidal signal. The final rotation angle is then computed based on the first, second, and third rotation angles. Specifically, an average value or a median value of the first, second, and third rotation angles may be computed as the final rotation angle. Also, a most outlying value among the first, second, and third rotation angles may be excluded and an average value of the other two rotation angles may be computed as the final rotation angle.

By this arrangement, the final rotation angle is computed based on the first, second, and third rotation angles and thus a detection error due to influence of noise included in the output signals of the sensors can be reduced. Also, the final rotation angle is computed based on the first, second, and third rotation angles that are computed from sensor output signals that are generated at the same time and thus a time lag does not arise in the rotation angle detection. A high response can thus be realized even when a rotation speed of the rotating body is high. Thus, by this arrangement, detection error due to the influence of noise can be reduced while maintaining a high response.

Also, with this arrangement, the output signal of the same sensor is used in common for a plurality of rotation angle computations in computing the first, second, and third rotation angles. Specifically, the first sinusoidal signal is used in common to compute the first rotation angle and the second rotation angle, the second sinusoidal signal is used in common to compute the first rotation angle and the third rotation angle, and the third sinusoidal signal is used in common to compute the second rotation angle and the third rotation angle. A merit that a low number of sensors suffices in comparison to a case where the output signal of the same sensor is not used in common for a plurality of rotation angle computations is thus provided.

In a preferred embodiment of the present invention, the first sensor outputs the first sinusoidal signal V1 expressed as V1=sin θ with respect to the rotation angle θ of the rotating body. Also, with respect to the rotation angle θ of the rotating body, the second sensor outputs the second sinusoidal signal V2 expressed as V2=sin(θ+α) using a phase difference α between the first and second sinusoidal signals. Also, with respect to the rotation angle θ of the rotating body, the third sensor outputs the third sinusoidal signal V3 expressed as V3=sin(θ+β) using a phase difference β between the first and third sinusoidal signals. The first rotation angle computing unit determines the first rotation angle $\theta_1$ by Formula (i) shown below. Also, the second rotation angle computing unit determines the second rotation angle $\theta_2$ by Formula (ii) shown below. Also, the third rotation angle computing unit determines the third rotation angle $\theta_3$ by Formula (iii) shown below.

$$\theta_1 = \tan^{-1}\frac{V1}{\cos\theta} \quad \cdots \quad (\text{i})$$

$$\text{where} \quad \cos\theta = \frac{V2 - V1\cdot\cos\alpha}{\sin\alpha}$$

$$\theta_2 = \tan^{-1}\frac{V1}{\cos\theta} \quad \cdots \quad (ii)$$

$$\text{where} \quad \cos\theta = \frac{V3 - V1\cdot\cos\beta}{\sin\beta}$$

$$\theta_3 = \theta_3' - \alpha \quad \cdots \quad (iii)$$

$$\text{where} \quad \begin{aligned} \theta_3' &= \tan^{-1}\frac{V2}{\cos\theta'} \\ \cos\theta' &= \frac{V3 - V2\cdot\cos(\beta-\alpha)}{\sin(\beta-\alpha)} \end{aligned}$$

With this arrangement, the first rotation angle $\theta_1$ is determined by Formula (i), the second rotation angle $\theta_2$ is determined by Formula (ii), and the third rotation angle $\theta_3$ is determined by Formula (iii). The final rotation angle is computed based on the first, second, and third rotation angles thus determined.

A second rotation angle detection device according to the present invention is a rotation angle detection device (40) that includes first and second sensors (11 and 12) respectively outputting first and second sinusoidal signals, which have phase differences with respect to each other, in accordance with rotation of a rotating body (1), detects a rotation angle of the rotating body based on the output signals of the sensors, and further includes a first rotation angle computing unit (41) using a predetermined first computation formula to compute a first rotation angle corresponding to the rotation angle of the rotating body based on the first sinusoidal signal and the second sinusoidal signal, a second rotation angle computing unit (42) using a predetermined second computation formula, differingfromthe first computation formula, to compute a second rotation angle corresponding to the rotation angle of the rotating body based on the first sinusoidal signal and the second sinusoidal signal, and a final rotation angle computing unit (43) computing a final rotation angle using the first rotation angle and the second rotation angle.

With this arrangement, the first rotation angle corresponding to the rotation angle of the rotating body is computed based on the first sinusoidal signal and the second sinusoidal signal and using the predetermined first computation formula. Also, the second rotation angle corresponding to the rotation angle of the rotating body is computed based on the first sinusoidal signal and the second sinusoidal signal and using the predetermined second computation formula differing from the first computation formula. The final rotation angle is computed using the first rotation angle and the second rotation angle.

With a rotation angle computed from two sinusoidal signals having a phase difference with respect to each other, there is a rotation angle range in which computation error is large due to a computation formula used for the computation of the rotation angle. With the above arrangement, the first rotation angle and the second rotation angle differ in the computation formula used for computation and thus differ in the rotation angle range in which the computation error is large. By the above-described arrangement, a rotation angle of low computation error can be computed using the first rotation angle and the second rotation angle. The detection precision of the rotation angle can thus be improved.

In a preferred embodiment of the present invention, the final rotation angle computing unit includes a rotation angle estimating unit (51) estimating the rotation angle of the rotating body and a computing unit (52) computing the final rotation angle using the first rotation angle and the second rotation angle in accordance with a rotation angle estimation value estimated by the rotation angle estimating unit.

The computing unit (52) may select a rotation angle of smaller computation error between the first rotation angle and the second rotation angle as a final rotation angle in accordance with the rotation angle estimation value estimated by the rotation angle estimating unit. Or, the computing unit may determine the final rotation angle by adding the first rotation angle and the second rotation angle upon applying weights respectively in accordance with the rotation angle estimation value estimated by the rotation angle estimating unit.

The rotation angle estimating unit (51) may compute an average value of the first rotation angle and the second rotation angle as the rotation angle estimation value. Or, for example, the first rotation angle or the second rotation angle, etc., may be used as the rotation angle estimation value. Or, after one of either the first rotation angle or the second rotation angle has first been selected as the final rotation angle, the currently selected first or second rotation angle may be used as the rotation angle estimation value. Further, after the final rotation angle has been computed first, the previously computed final rotation angle maybe used as a current rotation angle estimation value.

The above and yet other objects, features, and effects of the present invention shall be made clearer by the following description of the preferred embodiments with reference to the attached drawings.

Brief Description of Drawings

[FIG. 1] FIG. 1 is a schematic view of an arrangement of a rotation angle detection device according to a first preferred embodiment of the present invention.
[FIG. 2] FIG. 2 is an explanatory diagram for explaining a range in which computation error of a first rotation angle is large.
[FIG. 3] FIG. 3 is an explanatory diagram for explaining a range in which computation error of a second rotation angle is large.
[FIG. 4] FIG. 4 is an explanatory diagram for explaining an operation of a rotation angle selection unit.
[FIG. 5] FIG. 5 is a flowchart of a procedure of a rotation angle computing process performed by the rotation angle computing device.
[FIG. 6] FIG. 6 is a schematic view of an arrangement of a rotation angle detection device according to a second preferred embodiment of the present invention.
[FIG. 7] FIG. 7 is a flowchart of a procedure of a rotation angle computing process performed by the rotation angle computing device.
[FIG. 8] FIG. 8 shows explanatory diagrams for explaining a method for computing a final rotation angle by applying weights to the first rotation angle and the second rotation angle.
[FIG. 9] FIG. 9 is a schematic view of an arrangement of a rotation angle detection device according to a third preferred embodiment of the present invention.
[FIG. 10] FIG. 10 is a functional block diagram of a detailed arrangement of the rotation angle computing device.
[FIG. 11] FIG. 11 is a flowchart of a procedure of a rotation angle computing process performed by the rotation angle computing device.
[FIG. 12] FIG. 12 is a schematic view for explaining a method of rotation angle detection by a conventional rotation angle detection device.

Description of Embodiments

Preferred embodiments with which the present invention is applied to a rotation angle detection device for detecting a rotation angle of a rotor of a brushless motor shall now be described in detail with reference to the attached drawings.

FIG. 1 is a schematic view of an arrangement of a rotation angle detection device according to a first preferred embodiment of the present invention.

The rotation angle detection device may be used, for example, to detect a rotation angle of a rotor of a brushless motor for an electric power steering apparatus. The rotation angle detection device has, for example, a detection rotor 1 (hereinafter, referred to as the "rotor 1") that rotates in accordance with rotation of the brushless motor. The rotor 1 includes a magnet having two magnetic poles N and S. The above points apply in common to second and third preferred embodiments to be described later.

At a periphery of the rotor 1, three magnetic sensors 11, 12, and 13 are disposed at intervals in a circumferential direction of the rotor 1. The three magnetic sensors 11, 12, and 13 may be referred to at times as a first magnetic sensor 11, a second magnetic sensor 12, and a third magnetic sensor 13, respectively. As the magnetic sensors, for example, Hall elements, magnetoresistive elements (MR elements), or other elements having a characteristic of changing in electrical characteristic due to action of a magnetic field, may be used.

The first magnetic sensor 11 and the second magnetic sensor 12 are separated by an angular interval $\alpha$ centered about a central rotation axis of the rotor 1. The first magnetic sensor 11 and the third magnetic sensor 13 are separated by an angular interval $\beta$ that is centered about the central rotation axis of the rotor 1 and is larger than $\alpha$. In the present preferred embodiment, $\alpha$ is set to 90° and $\beta$ is set to 180°. Thus, in the present preferred embodiment, an angular interval between the second magnetic sensor 12 and the third magnetic sensor 13 is 90°.

A direction indicated by the arrow in FIG. 1 shall be deemed to be a positive rotation direction of the rotor 1. It shall also be deemed that the rotation angle of the rotor 1 increases when the rotor 1 is rotated in the positive direction, and the rotation angle of the rotor 1 decreases when the rotor 1 is rotated in the opposite direction. If, with respect to a rotation angle $\theta$ of the rotor 1, an output signal V1 of $V1 = A1 \cdot \sin\theta$ is output from the first magnetic sensor 11, an output signal V2 of $V2 = A2 \cdot \sin(\theta + \alpha) = A2 \cdot \sin(\theta + 90°)$ is output from the second magnetic sensor 12 and an output signal V3 of $V3 = A3 \cdot \sin(\theta + \beta) = A3 \cdot \sin(\theta + 180°)$ is output from the third magnetic sensor 13. A1, A2, and A3 respectively express amplitudes.

If the amplitudes A1, A2, and A3 are deemed to be mutually equal to a value A or the respective signals V1, V2, and V3 are normalized so that the respective amplitudes are of a certain predefined value A, the signals V1, V2, and V3 are respectively expressed as A·sin θ, A·sin(θ+α), and A·sin(θ+β). Here, if A=1, the signals V1, V2, and V3 are respectively expressed as sin θ, sin(θ+α), and sin(θ+β). Thus, to simplify the description, the output signals V1, V2, and V3 of the respective magnetic sensors 11, 12, and 13 shall be expressed as V1=sin θ, V2=sin(θ+α)=sin(θ+90°), and V3=sin(θ+β)=sin(θ+180°) in the following description.

The output signals V1, V2, and V3 of the respective magnetic sensors 11, 12, and 13 are input into a rotation angle computing device 20. The rotation angle computing device 20 computes the rotation angle θ of the rotor 1 based on the output signals V1, V2, and V3 of the respective magnetic sensors 11, 12, and 13. The rotation angle computing device 20 is arranged, for example, from a microcomputer and includes a CPU (central processing unit) and a memory (ROM, RAM, etc.). The rotation angle computing device 20 functions as a plurality of functional processing units by the CPU executing predetermined programs stored in the ROM. The plurality of functional processing units include a first rotation angle computing unit 21, a second rotation angle computing unit 22, and a rotation angle selection unit 23.

The first rotation angle computing unit 21 computes a first rotation angle $θ_1$ corresponding to the rotation angle of the rotor 1 based on the output signal V1 of the first magnetic sensor 11 and the output signal V2 of the second magnetic sensor 12. In the present preferred embodiment, V1=sin θ and V2=sin(θ+90°) =cos θ. Also, tan θ can be expressed as tan θ=sin θ/cos θ. The first rotation angle computing unit 21 thus computes the first rotation angle $θ_1$ based on the following Formula (2).

$$
\begin{aligned}
θ_1 &= \tan^{-1}\frac{\sin θ}{\cos θ} \quad, \\
&= \tan^{-1}\frac{\sin θ}{\sin(θ+90°)} \quad \cdots \quad (2) \\
&= \tan^{-1}\frac{V1}{V2}
\end{aligned}
$$

The second rotation angle computing unit 22 computes a second rotation angle $θ_2$ corresponding to the rotation angle of the rotor 1 based on the output signal V2 of the second magnetic sensor 12 and the output signal V3 of the third magnetic sensor 13. In the present preferred embodiment, V2=sin(θ+90°) and V3=sin(θ+180°)=cos(θ+90°). Also, tan (θ+90°) can be expressed as tan(θ+90°)=sin(θ+90°)/cos(θ+90°). The second rotation angle computing unit 22 thus computes the second rotation angle $θ_2$ based on the following Formula (3).

$$
\begin{aligned}
θ_2 &= \tan^{-1}\left(\frac{\sin(θ+90°)}{\cos(θ+90°)}\right)-90° \\
&= \tan^{-1}\left(\frac{\sin(θ+90°)}{\sin(θ+180°)}\right)-90° \quad \cdots \quad (3) \\
&= \tan^{-1}\left(\frac{V2}{V3}\right)-90°
\end{aligned}
$$

The rotation angle selection unit 23 selects one of either the first rotation angle $θ_1$ or the second rotation angle $θ_2$ as a final rotation angle θ in accordance with a rotation angle estimation value of the rotor 1. Concepts of the rotation angle selection by the rotation angle selection unit 23 shall now be described.

FIG. 2 shows variations of the output signals V1 (=sin θ) and V2 (=sin(θ+90°)) of the magnetic sensors 11 and 12 and sin θ/sin(θ+90°) at the right-hand side of Formula (2), with respect to the rotation angle θ of the rotor 1. When sin(θ+90°), which is a denominator of sin θ/sin(θ+90°), is small in absolute value, computation error of tan⁻¹(sin θ/sin(θ+90°)) is large and computation error of the first rotation angle $θ_1$ is large. Thus, in a case where the rotation angle θ of the rotor 1 is in a range near 90° (for example, a range of 90°±22.5°) or in a range near 270° (for example, a range of 270°±22.5°) as indicated by slanted line portions in FIG. 2, sin(θ+90°) is low in absolute value and the computation error of the first rotation angle $θ_1$ is high.

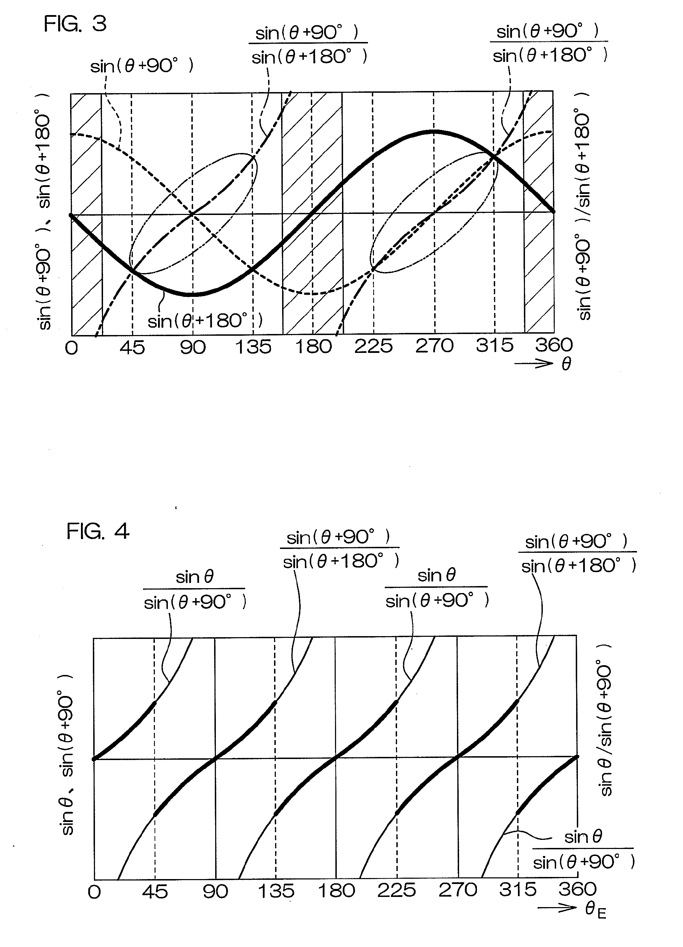

In FIG. 2, in portions of the curves expressing sin θ/sin(θ+90°) that are surrounded by dashed-line ellipses, the absolute value of sin(θ+90°) is large and thus, portions in which the computation error of tan⁻¹ (sin θ/sin(θ+90°)) is low (high in computation precision) are indicated. FIG. 3 shows variations of the output signals V2 (=sin θ+90°) and V3 (=sin (θ+180°)) of the magnetic sensors 12 and 13 and sin(θ+90°) /sin(θ+180°) at the right-hand side of Formula (3), with respect to the rotation angle $\theta$ of the rotor 1. When $\sin(\theta+180°)$, which is a denominator of $\sin(\theta+90°)/\sin(\theta+180°)$, is small in absolute value, computation error of $\tan^{-1}\{(\sin(\theta+90°)/\sin(\theta+180°))$ is large and computation error of the second rotation angle $\theta_2$ is large. Thus, in a case where the rotation angle $\theta$ of the rotor 1 is in a range near 0° (for example, a range of 0° to 22.5°) or in a range near 180° (for example, a range of $180°\pm22.5°$) or in a range near 360° (for example, a range of 337.5° to 360°) as indicated by slanted line portions in FIG. 3, $\sin(\theta+180°)$ is low in absolute value and the computation error of the second rotation angle $\theta_2$ is high.

In FIG. 3, in portions of the curves expressing $\sin(\theta+90°)/\sin(\theta+180°)$ that are surrounded by dashed-line ellipses, the absolute value of $\sin(\theta+180°)$ is high and thus, portions in which the computation error of $\tan^{-1}(\sin(\theta+90°))$ $/\sin(\theta+180°)$ is low (high in computation precision) are indicated.

As described with FIG. 2 and FIG. 3, the first rotation angle $\theta_1$ and the second rotation angle $\theta_2$ differ in the angle range in which the computation error is large. The rotation angle selection unit 23 thus estimates the rotation angle of the rotor 1 from the first rotation angle $\theta_1$ and the second rotation angle $\theta_2$ and selects, from between the first rotation angle $\theta_1$ and the second rotation angle $\theta_2$, the rotation angle estimated to be smaller in computation error (higher in computation precision) in accordance with the estimated rotation angle (rotation angle estimation value) as the final rotation angle $\theta$.

Specifically, the rotation angle selection unit 23 includes a rotation angle estimating unit 31 and a selection unit 32. The rotation angle estimating unit 31 determines a rotation angle estimation value $\theta_E$, for example, by computing an average of the first rotation angle $\theta_1$ and the second rotation angle $\theta_2$ based on the following Formula (4).

$$\theta_E = (\theta_1 + \theta_2)/2 \ \ldots \ (4)$$

The selection unit 32 uses the rotation angle estimation value $\theta_E$ obtained by the rotation angle estimating unit 31 to select one of either the first rotation angle $\theta_1$ or the second rotation angle $\theta_2$ as the final rotation angle $\theta$ in accordance with conditional formulae indicated as Formula (5) below.

$$] \quad \text{If } 0°\leq\theta_E<45°, \text{ then } \theta=\theta_1$$

$$\text{If } 45°\leq\theta_E<135°, \text{ then } \theta=\theta_2$$

$$\text{If } 135°\leq\theta_E<225°, \text{ then } \theta=\theta_1$$

$$\text{If } 225°\leq\theta_E<315°, \text{ then } \theta=\theta_2$$

$$\text{If } 315°\leq\theta_E<360°, \text{ then } \theta=\theta_1 \ \ldots \ (5)$$

FIG. 4 shows a variation of $\sin\theta/\sin(\theta+90°)$ with respect to the rotation angle estimation value $\theta_E$ and a variation of $\sin(\theta+90°)/\sin(\theta+180°)$ with respect to the rotation angle estimation value $\theta_E$. As mentioned above, $\tan^{-1}\{(\sin\theta)/\sin(\theta+90°)$ is used for computation of the first rotation angle $\theta_1$ and $\tan^{-1}\{(\sin(\theta+90°))/\sin(\theta+180°)\}$ is used for computation of the second rotation angle $\theta_2$.

In FIG. 4, portions of the curves expressing $\sin\theta/\sin(\theta+90°)$ that are high in computation precision (corresponding to the portions surrounded by the ellipses in FIG. 2) are indicated by lines that are thicker than the other portions. Likewise, portions of the curves expressing $\sin(\theta+90°)/\sin(\theta+180°)$ that are high in computation precision (corresponding to the portions surrounded by the ellipses in FIG. 3) are indicated by lines that are thicker than the other portions. In selecting the final rotation angle $\theta$ from between the first rotation angle $\theta_1$ and the second rotation angle $\theta_2$ in accordance with the conditional formulae indicated by Formula (5), the rotation angle computed using the thick-line portion (portion of high computation precision) of the curve corresponding to the rotation angle estimation value $\theta_E$ is selected as the final rotation angle $\theta$.

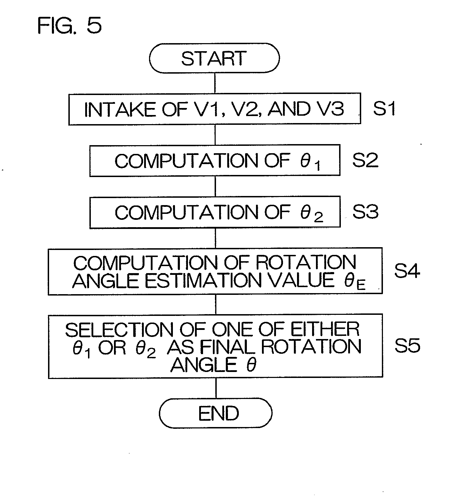

FIG. 5 is a flowchart of a procedure of a rotation angle computing process executed by the rotation angle computing device 20.

The rotation angle computing process is performed repeatedly at every predetermined computation cycle. First, the rotation angle computing device 20 takes in the output signals V1 ($=\sin\theta$), V2 ($=\sin(\theta+90°)$), and V3 ($=\sin(\theta+180°)$) of the magnetic sensors 11, 12, and 13 (step S1). The first rotation angle computing unit 21 of the rotation angle computing device 20 then uses the output signals V1 and V2 taken in at step S1 to compute the first rotation angle $\theta_1$ based on

Formula (2) (step S2).

Also, the second rotation angle computing unit 22 of the rotation angle computing device 20 uses the output signals V2 and V3 taken in at step S1 to compute the second rotation angle $\theta_2$ based on Formula (3) (step S3). Also, the rotation angle selection unit 23 of the rotation angle computing device 20 computes the rotation angle estimation value $\theta_E$ based on the first rotation angle $\theta_1$ and the second rotation angle $\theta_2$ (step S4). The rotation angle selection unit 23 determines, for example, an average value of the first rotation angle $\theta_1$ and the second rotation angle $\theta_2$ as the rotation angle estimation value $\theta_E$ based on Formula (4). The rotation angle selection unit 23 then uses the rotation angle estimation value $\theta E$ to select one of either the first rotation angle $\theta_1$ or the second rotation angle $\theta_2$ in accordance with the conditional formulae of Formula (5) as the final rotation angle $\theta$ (step S5) .

With the first preferred embodiment, the rotation angle of smaller computation error between the first rotation angle $\theta_1$ and the second rotation angle $\theta_2$ can be selected as the final rotation angle $\theta$ of the rotor 1. Detection precision of the rotation angle $\theta$ can thus be improved.

Although with the first preferred embodiment, three magnetic sensors are installed, four or more magnetic sensors may be installed instead, rotation angles corresponding to the rotation angle $\theta$ of the rotor 1 may be computed for each set of two adjacent sensors to determine three or more types of rotation angles as candidates of the final rotation angle $\theta$, and one of the rotation angle candidates may be selected as the final rotation angle $\theta$.

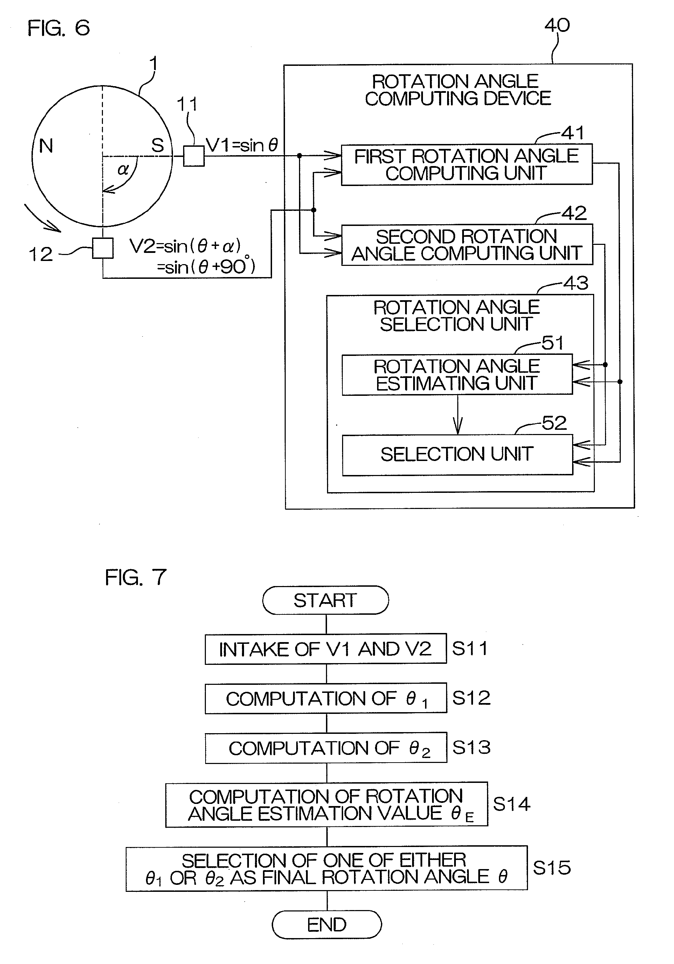

FIG. 6 is a schematic view of an arrangement of a rotation angle detection device according to a second preferred embodiment of the present invention.

At the periphery of the rotor 1, two magnetic sensors 11 and 12 are disposed at an interval in the circumferential direction of the rotor 1. The two magnetic sensors 11 and 12 may be referred to at times as the first magnetic sensor 11 and the second magnetic sensor 12, respectively. The first magnetic sensor 11 and the second magnetic sensor 12 are separated by the angular interval $\alpha$ centered about the central rotation axis of the rotor 1. In the present preferred embodiment, $\alpha$ is set to 90°.

The direction indicated by the arrow in FIG. 6 shall be deemed to be the positive rotation direction of the rotor 1. Also, as in the first preferred embodiment, the output signals of the respective magnetic sensors 11 and 12 shall be expressed in simple form in which the amplitudes thereof are deemed to be 1. If, with respect to the rotation angle $\theta$ of the rotor 1, the output signal V1 of V1=sin $\theta$ is output from the first magnetic sensor 11, the output signal V2 of V2=sin $(\theta+\alpha)$=sin($\theta$+90°) is output from the second magnetic sensor 12.

The output signals V1 and V2 of the respective magnetic sensors 11 and 12 are input into a rotation angle computing device 40. The rotation angle computing device 40 computes the rotation angle $\theta$ of the rotor 1 based on the output signals V1 and V2 of the respective magnetic sensors 11 and 12. The rotation angle computing device 40 is arranged, for example, from a microcomputer and includes a CPU (central processing unit) and a memory (ROM, RAM, etc.). The rotation angle computing device 40 functions as a plurality of functional processing units by the CPU executing predetermined programs stored in the ROM. The plurality of functional processing units include a first rotation angle computing unit 41, a second rotation angle computing unit 42, and a rotation angle selection unit 43.

The first rotation angle computing unit 41 uses a computation formula (hereinafter, referred to as the "first computation formula") indicated as Formula (6) below to compute the first rotation angle $\theta_1$ corresponding to the rotation angle of the rotor 1 based on the output signal V1 of the first magnetic sensor 11 and the output signal V2 of the second magnetic sensor 12. The first computation formula is the same as Formula (2) described with the first preferred embodiment.

$$\theta_1 = \tan^{-1}\frac{\sin\theta}{\sin\left(\theta+90°\right)}$$
$$= \tan^{-1}\frac{V1}{V2} \quad \cdots \quad (6)$$

The second rotation angle computing unit 42 uses a computation formula (hereinafter, referred to as the "second computation formula") indicated as Formula (7) below to compute the second rotation angle $\theta_2$ corresponding to the rotation angle of the rotor 1 based on the output signal V1 of the first magnetic sensor 11 and the output signal V3 of the second magnetic sensor 12.

$$\theta_2 = \tan^{-1}\left(\frac{\sin(\theta+90°)}{-\sin\theta}\right) - 90°$$
$$= \tan^{-1}\left(\frac{V2}{-V1}\right) - 90° \qquad \cdots \quad (7)$$

A method by which the second computation formula is derived shall now be described. The first output signal V1 is $\sin\theta$, and thus by inverting the signal V1, an inverted signal V1' expressed as V1'=-$\sin\theta$ can be generated. The inverted signal V1' can be expressed as V1'=-$\sin\theta$=$\sin(\theta+180°)$ and thus the inverted signal V1', like the third output signal V3 in the first preferred embodiment, is a signal that is advanced in phase by 180° with respect to the first output signal V1. In other words, this signal is advanced in phase by 90° with respect to the second output signal V2 (=$\sin(\theta+90°)$).

The inverted signal V1' can thus be expressed as V1'=-$\sin\theta$=$\sin(\theta+180°)$=$\cos(\theta+90°)$. $\tan(\theta+90°)$ can be expressed as $\tan(\theta+90°)$=$\sin(\theta+90°)$/$\cos(\theta+90°)$. The rotation angle $\theta$ can thus be expressed as $\theta$=$\tan^{-1}${$\sin(\theta+90°)$/-$\sin\theta$}-90°=$\tan^{-1}$(V2/-V1)-90°. By using this rotation angle $\theta$ as the second rotation angle $\theta_2$, Formula (7) can be derived.

The rotation angle selection unit 43 selects one of either the first rotation angle $\theta_1$ or the second rotation angle $\theta_2$ as the final rotation angle $\theta$ in accordance with a rotation angle estimation value of the rotor 1. As described using FIG. 2 with the first preferred embodiment, the computation error of the first rotation angle $\theta_1$ is large when the rotation angle $\theta$ of the rotor 1 is in a range near 90° (for example, the range of 90°$\pm$22.5°) or in a range near 270° (for example, the range of 270°$\pm$22.5°).

As with the third output signal V3=$\sin(\theta+180°)$ of the first preferred embodiment, the inverted signal V1' (=-$\sin\theta$) of the first output signal V1 can be expressed as V1'=$\sin(\theta+180°)$. Curves that express V2=$\sin(\theta+90°)$, V1'=$\sin(-\theta)$, and $\sin(\theta+90°)$/-$\sin\theta$ in the second preferred embodiment are the same as the curves that express $\sin(\theta+90°)$, $\sin(\theta+180°)$, and $\sin(\theta+90°)$/$\sin(\theta+180°)$ in FIG. 3. Thus, in a case where the rotation angle $\theta$ of the rotor 1 is in a range near $\theta$ or in a range near 180° or in a range near 360° as indicated by the slanted line portions in FIG. 3, the computation error of the second rotation angle $\theta_2$ is high in the second preferred embodiment as well. That is, the first rotation angle $\theta_1$ and the second rotation angle $\theta_2$ differ in the rotor angle range in which the computation error is large in the second preferred embodiment as well.

The rotation angle selection unit 43 thus estimates the rotation angle of the rotor 1, for example, from the first rotation angle $\theta_1$ and the second rotation angle $\theta_2$ and selects, from between the first rotation angle $\theta_1$ and the second rotation angle $\theta_2$, the rotation angle that is estimated to be smaller in computation error (higher in computation precision) in accordance with the estimated rotation angle (rotation angle estimation value) as the final rotation angle $\theta$. Specifically, the rotation angle selection unit 43 includes a rotation angle estimating unit 51 and a selection unit 52. The rotation angle estimating unit 51 determines a rotation angle estimation value $\theta_E$, for example, by computing an average of the first rotation angle $\theta_1$ and the second rotation angle $\theta_2$ based on the following Formula (8).

$$\theta_E = (\theta_1 + \theta_2)/2 \quad \cdots \quad (8)$$

The selection unit 52 uses the rotation angle estimation value $\theta_E$ obtained by the rotation angle estimating unit 51 to select one of either the first rotation angle $\theta_1$ or the second rotation angle $\theta_2$ as the final rotation angle $\theta$ in accordance with conditional formulae indicated as Formula (9) below. These conditional formulae are the same as the conditional formulae in the first preferred embodiment (see Formula (5)).

$$\text{If } 0° \leq \theta_E < 45°, \text{ then } \theta = \theta_1$$

$$\text{If } 45° \leq \theta_E < 135°, \text{ then } \theta = \theta_2$$

$$\text{If } 135° \leq \theta_E < 225°, \text{ then } \theta = \theta_1$$

$$\text{If } 225° \leq \theta_E < 315°, \text{ then } \theta = \theta_2$$

$$\text{If } 315° \leq \theta_E < 360°, \text{ then } \theta = \theta_1 \quad \dots \quad (9)$$

FIG. 7 is a flowchart of a procedure of a rotation angle computing process executed by the rotation angle computing device 40.

The rotation angle computing process is performed repeatedly at every predetermined computation cycle. First, the rotation angle computing device 40 takes in the output signals V1 (=sin θ) and V2 (=sin(θ+90°)) of the magnetic sensors 11 and 12 (step S11). The first rotation angle computing unit 41 of the rotation angle computing device 40 then uses the output signals V1 and V2 taken in at step S1 to compute the first rotation angle $\theta_1$ based on the first computation formula indicated by Formula (6) (step S12).

Also, the second rotation angle computing unit 42 of the rotation angle computing device 40 uses the output signals V1 and V2 taken in at step S11 to compute the second rotation angle $\theta_2$ based on the second computation formula indicated by Formula (7) (step S13).

Also, the rotation angle selection unit 43 of the rotation angle computing device 40 computes the rotation angle estimation value $\theta_E$ based on the first rotation angle $\theta_1$ and the second rotation angle $\theta_2$ (step S14). The rotation angle selection unit 43 determines, for example, the average value of the first rotation angle $\theta_1$ and the second rotation angle $\theta_2$ as the rotation angle estimation value $\theta_E$ based on Formula (8). The rotation angle selection unit 23 then uses the rotation angle estimation value $\theta_E$ to select one of either the first rotation angle $\theta_1$ or the second rotation angle $\theta_2$ in accordance with the conditional formulae of Formula (9) as the final rotation angle θ (step S15) .

The rotation angle of smaller computation error between the first rotation angle $\theta_1$ and the second rotation angle $\theta_2$ can be selected as the final rotation angle θ of the rotor 1 in the second preferred embodiment as well. The detection precision of the rotation angle θ can thus be improved. In the second preferred embodiment, the two types of rotation angles $\theta_1$ and $\theta_2$ that mutually differ in the angle range in which the computation error is large can be computed from the output signals V1 and V2 of the two magnetic sensors 11 and 12, thus providing a merit that a smaller number of magnetic sensors suffices in comparison to the first preferred embodiment.

Although the first and second preferred embodiments of the present invention have been described above, the present invention may also be put in practice in other modes as well. For example, although in the first and second preferred embodiments, one of either the first rotation angle $\theta_1$ or the second rotation angle $\theta_2$ is selected as the final rotation angle θ in accordance with the rotation angle estimation value $\theta_E$, the final rotation angle θ may instead be determined by adding the first rotation angle $\theta_1$ and the second rotation angle $\theta_2$ upon applying weights respectively in accordance with the rotation angle estimation value $\theta_E$.

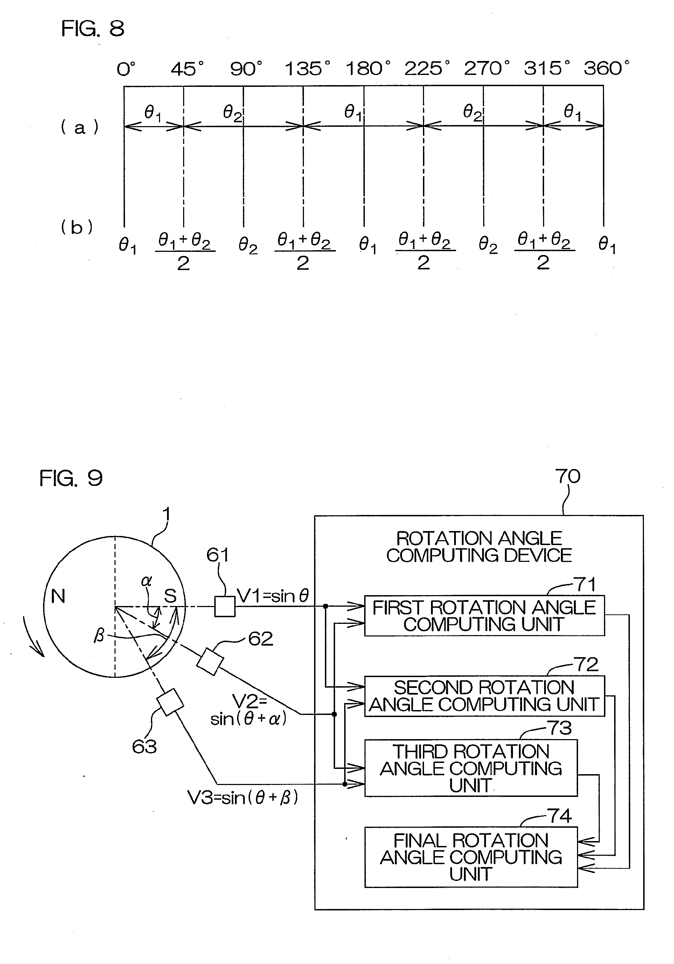

For example, in a case of selecting the rotation angle in accordance with the conditional formulae of Formula (5) or (9), the angle range in which the first rotation angle $\theta_1$ is selected and the angle range in which the second rotation angle $\theta_2$ is selected are as shown in FIG. 8A. Thus, as shown in FIG. 8B, when the rotation angle estimation value $\theta_E$ is 0° (360°) or 180°, which are the median values of the ranges in which the first rotation angle $\theta_1$ is selected, the first rotation angle $\theta_1$ is set as the final rotation angle θ. Likewise, when the rotation angle estimation value $\theta_E$ is 90° or 270°, which are the median values of the ranges in which the second rotation angle $\theta_2$ is selected, the second rotation angle $\theta_2$ is set as the final rotation angle θ.

In the range of $0° < \theta_E < 90°$, the range of $90° < \theta_E < 180°$, the range of $180° < \theta_E < 270°$, or the range of $270° < \theta_E < 360°$, a value obtained by adding the first rotation angle $\theta_1$ and the second rotation angle $\theta_2$ upon applying weights $w_1$ and $w_2$ ($w_1 + w_2 = 1$) respectively in accordance with the position within the range (angle: rotation angle estimation value $\theta_E$) is set as the final rotation angle θ ($= w_1 \theta_1 + w_2 \theta_2$). Specifically, the weights $w_1$ and $w_2$ are determined based on the following Formula (10).

i)     $0° < \theta_E < 90°$

$$w_2 = \frac{\theta_E}{90}, w_1 = 1 - w_2$$

ii)     $90° < \theta_E < 180°$

$$w_1 = \frac{\theta_E - 90}{90}, w_2 = 1 - w_1$$

iii)     $180° < \theta_E < 270°$

$$w_2 = \frac{\theta_E - 180}{90}, w_1 = 1 - w_2$$

iv)     $270° < \theta_E < 360°$

$$w_1 = \frac{\theta_E - 270}{90}, w_2 = 1 - w_1 \qquad \cdots \quad (10)$$

In such a case where weights $w_1$ and $w_2$ are set, at an exact middle position ($\theta_E$=45°, 135°, 225°, 315°) in any one of the above ranges, the weights $w_1$ and $w_2$ for the first rotation angle $\theta_1$ and the second rotation angle $\theta_2$ are both 0.5 and thus the final rotation angle $\theta$ for that position is the average value of the first rotation angle $\theta_1$ and the second rotation angle $\theta_2$ (($\theta_1 + \theta_2$)/2).

Although in the first and second preferred embodiments, the rotation angle estimation value $\theta_E$ is determined by computing the average of the first rotation angle $\theta_1$ and the second rotation angle $\theta_2$, one of either the first rotation angle $\theta_1$ or the second rotation angle $\theta_2$ may be used as the rotation angle estimation value $\theta_E$ instead. Also, after one of either the first rotation angle $\theta_1$ or the second rotation angle $\theta_2$ has first been selected as the final rotation angle $\theta$, the currently selected first or second rotation angle $\theta_1$ or $\theta_2$ may be used as the rotation angle estimation value $\theta_E$. Further, after the first computation of the final rotation angle, the previously computed final rotation angle $\theta$ may be used as the current rotation angle estimation value $\theta_E$.

Also, in the first and second preferred embodiments, the first or second rotation angle $\theta_1$ or $\theta_2$ is determined by computing $\tan^{-1}X$, it may be determined, for example, by using a map instead of computing $\tan^{-1}X$.

FIG. 9 is a schematic view of an arrangement of a rotation angle detection device according to a third preferred embodiment of the present invention.

At the periphery of the rotor 1, three magnetic sensors 61, 62, and 63 are disposed at intervals in the circumferential direction of the rotor 1. The three magnetic sensors 61, 62, and 63 may be referred to at times as a first magnetic sensor 61, a second magnetic sensor 62, and a third magnetic sensor 63, respectively. The first magnetic sensor 61 and the second magnetic sensor 62 are separated by an angular interval $\alpha$ centered about the central rotation axis of the rotor 1. In the present example, $\alpha$ is set, for example, to 30°. The first magnetic sensor 61 and the thirdmagnetic sensor 63 are separated by an angular interval $\beta$ that is centered about the central rotation axis of the rotor 1 and is larger than $\alpha$. In the present example, $\beta$ is set, for example, to 60°. Thus, an angular interval between the second magnetic sensor 62 and the third magnetic sensor 63 is ($\beta$-$\alpha$). In the present example, ($\beta$-$\alpha$) is 30 ° .

The direction indicated by the arrow in FIG. 9 shall be deemed to be the positive rotation direction of the rotor 1. Also, as in the first preferred embodiment, the output signals of the respective magnetic sensors 11 and 12 shall be expressed in simple form in which the amplitudes thereof are deemed to be 1. If, with respect to the rotation angle $\theta$ of the rotor 1, the output signal V1 of V1=sin $\theta$ is output from the first magnetic sensor 61, the output signal V2 of V2=sin ($\theta$+$\alpha$) is output from the second magnetic sensor 62, and the output signal V3 of V3=sin($\theta$+$\beta$) is output from the third magnetic sensor 63.

The output signals V1, V2, and V3 of the respective magnetic sensors 61, 62, and 63 are input into a rotation angle computing device 70. The rotation angle computing device 70 computes the rotation angle $\theta$ of the rotor 1 based on the output signals V1, V2, and V3 of the respective magnetic sensors 61, 62, and 63. The rotation angle computing device 70 is arranged, for example, from a microcomputer and includes a CPU (central processing unit) and a memory (ROM, RAM, etc.). The rotation angle computing device 70 functions as a plurality of functional processing units by the CPU executing predetermined programs stored in the ROM. The plurality of functional processing units include a first rotation angle computing unit 71, a second rotation angle computing unit 72, a third rotation angle computing unit 73, and a final rotation angle computing unit 74.

The first rotation angle computing unit 71 computes a first rotation angle $\theta_1$ corresponding to the rotation angle of the rotor 1 based on the output signal V1 of the first magnetic sensor 61 and the output signal V2 of the second magnetic sensor 62. The second rotation angle computing unit 72 computes a second rotation angle $\theta_2$ corresponding to the rotation angle of the rotor 1 based on the output signal V1 of the first magnetic sensor 61 and the output signal V3 of the third magnetic sensor 63. The third rotation angle computing unit 73 computes a third rotation angle $\theta_3$ corresponding to the rotation angle of the rotor 1 based on the output signal V2 of the second magnetic sensor 62 and the output signal V3 of the third magnetic sensor 63.

The final rotation angle computing unit 74 computes a final rotation angle $\theta$ based on the first, second, and third rotation angles $\theta_1$, $\theta_2$, and $\theta_3$ respectively computed by the first, second, and third rotation angle computing units 71, 72, and 73.

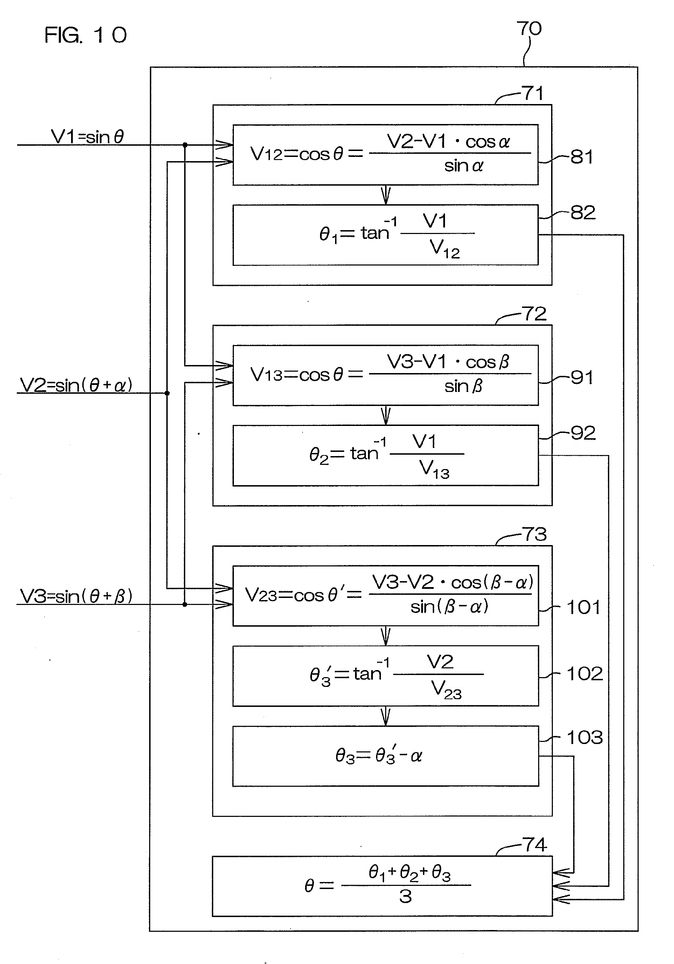

FIG. 10 is a functional block diagram of a further detailed arrangement of the rotation angle computing device 70.

The first rotation angle computing unit 71 includes a signal generating unit 81 and an angle computing unit 82. The signal generating unit 81 generates, from the first output signal V1 (=sin $\theta$) and the second output signal V2 (=sin($\theta$+$\alpha$)), a signal $V_{12}$ (=sin($\theta$+90°)=cos $\theta$) with a phase difference of 90° with respect to the first output signal V1. Specifically, the signal generating unit 81 generates the signal $V_{12}$ based on the following Formula (11).

$$V_{12} = \cos\theta$$
$$= \frac{\sin(\theta+\alpha) - \sin\theta \cdot \cos\alpha}{\sin\alpha} \quad \cdots \quad (11)$$
$$= \frac{V2 - V1 \cdot \cos\alpha}{\sin\alpha}$$

That is, the signal generating unit 81 generates the signal $V_{12}$ (=cos $\theta$) from the first output signal V1 (=sin $\theta$), the second output signal V2 (=sin($\theta$+$\alpha$)), cos $\alpha$, and sin $\alpha$. cos $\alpha$ and sin $\alpha$ are stored in the memory in advance. Formula (11) may be derived based on a formula obtained by expansion of sin($\theta$+$\alpha$) based on a trigonometric function addition theorem.

The angle computing unit 82 uses the signal $V_{12}$ (=cos $\theta$) generated by the signal generating unit 81 and the first output signal V1 (=sin $\theta$) to compute the first rotation angle $\theta_1$ based on the following Formula (12).

$$\theta_1 = \tan^{-1}\frac{\sin\theta}{\cos\theta}$$
$$= \tan^{-1}\frac{V1}{V_{12}} \quad \cdots \quad (12)$$

The second rotation angle computing unit 72 includes a signal generating unit 91 and an angle computing unit 92. The signal generating unit 91 generates, from the first output signal V1 (=sin $\theta$) and the third output signal (=sin($\theta$+$\beta$)), a signal $V_{13}$ (=sin($\theta$+90°)=cos $\theta$) with a phase difference of 90° with respect to the first output signal V1. Specifically, the signal generating unit 91 generates the signal $V_{13}$ based on the following Formula (13).

$$V_{13} = \cos\theta$$
$$= \frac{\sin(\theta+\alpha) - \sin\theta \cdot \cos\beta}{\sin\beta} \quad \cdots \quad (13)$$
$$= \frac{V3 - V1 \cdot \cos\beta}{\sin\beta}$$

That is, the signal generating unit 91 generates the signal $V_{13}$ (=cos $\theta$) from the first output signal V1 (=sin $\theta$), the third output signal V3 (=sin($\theta$+$\beta$)), cos $\beta$, and sin $\beta$. cos $\beta$ and sin $\beta$ are stored in the memory in advance. Formula (13) may be derived based on a formula obtained by expansion of sin($\theta$+$\beta$) based on the trigonometric function addition theorem as in the Formula (11).

The angle computing unit 92 uses the signal $V_{13}$ (=cos $\theta_2$) generated by the signal generating unit 91 and the first output signal V1 (=sin $\theta$) to compute the second rotation angle $\theta_2$ based on the following Formula (14).

$$\theta_2 = \tan^{-1}\frac{\sin\theta}{\cos\theta}$$
$$= \tan^{-1}\frac{V1}{V_{13}} \quad \cdots \quad (14)$$

Concepts of a method by which the third rotation angle computing unit 73 computes the third rotation angle $\theta_3$ shall now be described. The third rotation angle computing unit 73 first computes a rotation angle $\theta_3$' ($=\theta+\alpha$) that leads the rotation angle $\theta$ of the rotor 1 by just $\alpha$ based on the second output signal V2 and the third output signal V3. The third rotation angle $\theta_3$ is then computed by subtracting $\alpha$ from the rotation angle $\theta_3$' obtained.

The third rotation angle computing unit 73 includes a signal generating unit 101, an angle computing unit 102, and an angle computing unit 103. The signal generating unit 101 uses the second output signal V2 ($=\sin(\theta+\alpha)$) and the third output signal V3 ($=\sin(\theta+\beta)$) to generate a signal $V_{23}$ ($=\sin(\theta+\alpha+90°)$) with a phase difference of 90° with respect to the second output signal V2.

By setting $\theta'=\theta+\alpha$, expressing the output signal V2 as a sinusoidal signal $\sin\theta'$, and expressing the output signal V3 as a sinusoidal signal $\sin(\theta' + (\theta-\alpha))$ that leads the sinusoidal signal $\sin\theta'$ by a phase difference of $(\beta-\alpha)$, the signal $V_{23}$ ($=\sin(\theta'+90°) =\cos\theta'$) with a phase difference of 90° with respect to the sinusoidal signal $\sin\theta'$ can be determined by the same method as that of the first rotation angle computing unit 71.

Specifically, the signal generating unit 101 generates the signal $V_{23}$ based on the following Formula (15).

$$V_{23} = \cos\theta'$$
$$= \frac{\sin(\theta'+(\beta-\alpha))-\sin\theta'\cdot\cos(\beta-\alpha)}{\sin(\beta-\alpha)}$$
$$= \frac{\sin(\theta+\beta)-\sin(\theta+\alpha)\cdot\cos(\beta-\alpha)}{\sin(\beta-\alpha)} \quad \cdots \quad (15)$$
$$= \frac{V3-V2\cdot\cos(\beta-\alpha)}{\sin(\beta-\alpha)}$$

That is, the signal generating unit 101 generates the signal $V_{23}$ ($=\cos\theta'$) from the second output signal V2 ($=\sin(\theta+\alpha)$), the third output signal V3 ($=\sin(\theta+\beta)$), $\cos(\beta-\alpha)$, and $\sin(\beta-\alpha)$. $\cos(\beta-\alpha)$, and $\sin(\beta-\alpha)$ are stored in the memory in advance.

The angle computing unit 102 uses the signal $V_{23}$ ($=\cos\theta'$) generated by the signal generating unit 101 and the second output signal V2 ($=\sin\theta'=\sin(\theta+\alpha)$) to compute the rotation angle $\theta_3$' based on the following formula (16).

$$\theta_3' = \tan^{-1}\frac{\sin\theta'}{\cos\theta'}$$
$$= \tan^{-1}\frac{\sin(\theta+\alpha)}{\cos\theta'} \quad \cdots \quad (16)$$
$$= \tan^{-1}\frac{V2}{V_{23}}$$

The angle computing unit 103 computes the third rotation angle $\theta_3$ based on the following Formula (17).

$$\theta_3=\theta_3'-\alpha \cdots \quad (17)$$

$\alpha$ is stored in the memory in advance.

The final rotation angle computing unit 74 computes the final rotation angle $\theta$ based, for example, on the following Formula (18) . That is, the final rotation angle computing unit 74 computes an average value of the first, second, and

third rotation angles $\theta_1$, $\theta_2$, and $\theta_3$ as the final rotation angle $\theta$.
$$\theta=(\theta_1+\theta_2+\theta_3)/3 \ ... \ (18)$$

FIG. 11 is a flowchart of a procedure of a rotation angle computing process executed by the rotation angle computing device 70.

The rotation angle computing process is performed repeatedly at every predetermined computation cycle. First, the rotation angle computing device 70 takes in the output signals V1 (=sin $\theta$), V2 (=sin($\theta+\alpha$) ), and V3 (=sin($\theta+\beta$)) of the respective magnetic sensors 61, 62, and 63 (step S21). The first rotation angle computing unit 71 of the rotation angle computing device 70 then uses the output signals V1 and V2 taken in at step S21, the values of sin $\alpha$ and cos $\alpha$ stored in the memory, and Formulae (11) and (12) to compute the first rotation angle $\theta_1$ (step S22).

Also, the second rotation angle computing unit 72 of the rotation angle computing device 70 uses the output signals V1 and V3 taken in at step S21, the values of sin $\beta$ and cos $\beta$ stored in the memory, and Formulae (13) and (14) to compute the second rotation angle $\theta_2$ (step S23).

Also, the third rotation angle computing unit 73 of the rotation angle computing device 70 uses the output signals V2 and V3 taken in at step S21, the values of $\alpha$, sin($\beta-\alpha$) and cos($\beta-\alpha$) stored in the memory, and Formulae (15), (16), and (17) to compute the third rotation angle $\theta_3$ (step S24).

The final rotation angle computing unit 74 of the rotation angle computing device 70 then computes the final rotation angle $\theta$ based on the first, second, and third rotation angles $\theta_1$, $\theta_2$, and $\theta_3$ (step S25). The final rotation angle computing unit 74, for example, computes the average value of the first, second, and third rotation angles $\theta_1$, $\theta_2$, and $\theta_3$ based on Formula (18) as the final rotation angle $\theta$.

With the third preferred embodiment, the average value of the three rotation angles $\theta_1$, $\theta_2$, and $\theta_3$ is determined as the final rotation angle $\theta$. Detection error due to influence of noise contained in the output signals of the magnetic sensors can thus be reduced. Also, the final rotation angle $\theta$ is computed based on the three rotation angles $\theta_1$, $\theta_2$, and $\theta_3$ that are computed from the output signals V1, V2, and V3 that are generated at the same time and thus a time lag does not arise in the rotation angle detection in comparison to a case where the final rotation angle is computed by averaging the rotation angle in a time direction. A high response can thus be realized even when a rotation speed of the rotor 1 is high. Thus, by the preferred embodiment, detection error due to the influence of noise can be reduced while maintaining a high response.

Also, with the third preferred embodiment, the output signal of the same magnetic sensor is used in common for a plurality of rotation angle computations in computing the first, second, and third rotation angles $\theta_1$, $\theta_2$, and $\theta_3$. Specifically, the signal V1 is used in common to compute $\theta_1$ and $\theta_2$, the signal V2 is used in common to compute $\theta_1$ and $\theta_3$, and the signal V3 is used in common to compute $\theta_2$ and $\theta_3$. A merit that a low number of magnetic sensors suffices in comparison to a case where the output signal of the same magnetic sensor is not used in common for a plurality of rotation angle computations is thus provided. Specifically, in a case where the three types of rotation angles are to be computed as described above, whereas six magnetic sensors are required if the output signal of the same magnetic sensor is not used in common for a plurality of rotation angle computations, three magnetic sensors suffice in the present preferred embodiment.

Also, although with the third preferred embodiment, the final rotation angle computing unit 74 computes the average of the three rotation angles $\theta_1$, $\theta_2$, and $\theta_3$ as the final rotation angle $\theta$, it may compute a median value among three rotation angles $\theta_1$, $\theta_2$, and $\theta_3$ as the final rotation angle $\theta$ instead. Further, the final rotation angle computing unit 74 may exclude a most outlying value among the three rotation angles $\theta_1$, $\theta_2$, and $\theta_3$ and compute an average value of the other two as the final rotation angle $\theta$. Specifically, an average value of the median value among the three rotation angles $\theta_1$, $\theta_2$, and $\theta_3$ and the rotation angle among the other two rotation angles that is smaller in difference with respect to the median value is determined as the final rotation angle $\theta$.

Also, although with the third preferred embodiment, three magnetic sensors are installed, four or more magnetic sensors may be installed instead. For example, in a case where four magnetic sensors are installed, there are six ways of combining two sensors from among the four sensors and thus six types of rotation angles can be detected at the same time.

Also, the present invention may be applied to a case where the rotation angle of a rotating body besides a rotor of a brushless motor is detected.

While preferred embodiments of the present invention have been described in detail above, these are merely specific examples for clarifying the technical contents of the present invention, the present invention should not be interpreted as being limited to the specific examples, and the scope of the present invention is to be limited solely by the attached claims.

The present application corresponds to Japanese Patent Application No. 2009-195190 and Japanese Patent Application No. 2009-195191 filed in the Japan Patent Office on August 26, 2009 and Japanese Patent Application No. 2010-166122 filed in the Japan Patent Office on July 23, 2010, and the entire disclosures of the applications are incorporated herein by reference.

Reference Signs List

1 Rotor
11, 12, 13, 61, 62, 63 Magnetic sensor

**Claims**

1. A rotation angle detection device comprising first, second, and third sensors respectively outputting first, second, and third sinusoidal signals, that have phase differences with respect to each other, in accordance with rotation of a rotating body and detecting a rotation angle of the rotating body based on the output signals of the sensors, the rotation angle detection device further comprising:

   a rotation angle computing unit, that, for each of two or more combinations among a combination of the first sinusoidal signal and the second sinusoidal signal, a combination of the first sinusoidal signal and the third sinusoidal signal, and a combination of the second sinusoidal signal and the third sinusoidal signal, computes a rotation angle corresponding to the rotation angle of the rotating body based on the two sinusoidal signals included in the combination; and
   a final rotation angle computing unit computing a final rotation angle using a plurality of rotation angles computed by the rotation angle computing unit.

2. The rotation angle detection device according to Claim 1, wherein
   the rotation angle computing unit comprises:

   a first rotation angle computing unit computing a first rotation angle corresponding to the rotation angle of the rotating body based on the first sinusoidal signal and the second sinusoidal signal; and
   a second rotation angle computing unit computing a second rotation angle corresponding to the rotation angle of the rotating body based on the second sinusoidal signal and the third sinusoidal signal; and
   the final rotation angle computing unit computes the final rotation angle using the first rotation angle and the second rotation angle.

3. The rotation angle detection device according to Claim 2, wherein
   the final rotation angle computing unit comprises:

   a rotation angle estimating unit estimating the rotation angle of the rotating body; and
   a computing unit computing the final rotation angle using the first rotation angle and the second rotation angle in accordance with a rotation angle estimation value estimated by the rotation angle estimating unit.

4. The rotation angle detection device according to Claim 3, wherein the computing unit selects a rotation angle of smaller computation error between the first rotation angle and the second rotation angle as a final rotation angle in accordance with the rotation angle estimation value estimated by the rotation angle estimating unit.

5. The rotation angle detection device according to Claim 3, wherein the computing unit determines the final rotation angle by adding the first rotation angle and the second rotation angle upon applying weights respectively in accordance with the rotation angle estimation value estimated by the rotation angle estimating unit.

6. The rotation angle detection device according to any one of Claims 3 to 5, wherein the rotation angle estimating unit computes an average value of the first rotation angle and the second rotation angle as the rotation angle estimation value.

7. The rotation angle detection device according to Claim 1, wherein

the rotation angle computing unit comprises:

a first rotation angle computing unit computing a first rotation angle corresponding to the rotation angle of the rotating body based on the first sinusoidal signal and the second sinusoidal signal;

a second rotation angle computing unit computing a second rotation angle corresponding to the rotation angle of the rotating body based on the first sinusoidal signal and the third sinusoidal signal; and

a third rotation angle computing unit computing a third rotation angle corresponding to the rotation angle of the rotating body based on the second sinusoidal signal and the third sinusoidal signal; and

the final rotation angle computing unit computes the final rotation angle based on the first, second, and third rotation angles.

8. The rotation angle detection device according to Claim 7, wherein
the first sensor outputs the first sinusoidal signal V1 expressed as V1=sin θ with respect to the rotation angle θ of the rotating body,
the second sensor outputs, with respect to the rotation angle θ of the rotating body, the second sinusoidal signal V2 expressed as V2=sin(θ+α) using a phase difference α between the first and second sinusoidal signals,
the third sensor outputs, with respect to the rotation angle θ of the rotating body, the third sinusoidal signal V3 expressed as V3=sin(θ+β) using a phase difference β between the first and third sinusoidal signals,
the first rotation angle computing unit determines the first rotation angle $\theta_1$ by Formula (i) shown below,
the second rotation angle computing unit determines the second rotation angle $\theta_2$ by Formula (ii) shown below, and
the third rotation angle computing unit determines the third rotation angle $\theta_3$ by Formula (iii) shown below.

$$\theta_1 = \tan^{-1}\frac{V1}{\cos\theta} \quad \ldots \quad (i)$$

$$\text{where} \quad \cos\theta = \frac{V2 - V1\cdot\cos\alpha}{\sin\alpha}$$

$$\theta_2 = \tan^{-1}\frac{V1}{\cos\theta} \quad \ldots \quad (ii)$$

$$\text{where} \quad \cos\theta = \frac{V3 - V1\cdot\cos\beta}{\sin\beta}$$

$$\theta_3 = \theta_3' - \alpha \quad \ldots \quad (iii)$$

$$\text{where} \quad \begin{aligned} \theta_3' &= \tan^{-1}\frac{V2}{\cos\theta'} \\ \cos\theta' &= \frac{V3 - V2\cdot\cos(\beta-\alpha)}{\sin(\beta-\alpha)} \end{aligned}$$

9. A rotation angle detection device comprising first and second sensors respectively outputting first and second sinusoidal signals, which have phase differences with respect to each other, in accordance with rotation of a rotating body and detecting a rotation angle of the rotating body based on the output signals of the sensors, the rotation angle detection device further comprising:

a first rotation angle computing unit using a predetermined first computation formula to compute a first rotation angle corresponding to the rotation angle of the rotating body based on the first sinusoidal signal and the second sinusoidal signal;

a second rotation angle computing unit using a predetermined second computation formula, differing from the first computation formula, to compute a second rotation angle corresponding to the rotation angle of the rotating body based on the first sinusoidal signal and the second sinusoidal signal; and

a final rotation angle computing unit computing a final rotation angle using the first rotation angle and the second rotation angle.

**10.** The rotation angle detection device according to Claim 9, wherein the final rotation angle computing unit comprises:

a rotation angle estimating unit estimating the rotation angle of the rotating body; and
a computing unit computing the final rotation angle using the first rotation angle and the second rotation angle in accordance with a rotation angle estimation value estimated by the rotation angle estimating unit.

**11.** The rotation angle detection device according to Claim 10, wherein the computing unit selects a rotation angle of smaller computation error between the first rotation angle and the second rotation angle as a final rotation angle in accordance with the rotation angle estimation value estimated by the rotation angle estimating unit.

**12.** The rotation angle detection device according to Claim 10, wherein the computing unit determines the final rotation angle by adding the first rotation angle and the second rotation angle upon applying weights respectively in accordance with the rotation angle estimation value estimated by the rotation angle estimating unit.

**13.** The rotation angle detection device according to any one of Claims 10 to 12, wherein the rotation angle estimating unit computes an average value of the first rotation angle and the second rotation angle as the rotation angle estimation value.

FIG. 1

FIG. 2

FIG. 3

$$\frac{\sin(\theta+90°)}{\sin(\theta+180°)}$$

$$\frac{\sin(\theta+90°)}{\sin(\theta+180°)}$$

$\sin(\theta+90°)$

$\sin(\theta+180°)$

0   45   90   135   180   225   270   315   360   $\theta$

FIG. 4

$$\frac{\sin\theta}{\sin(\theta+90°)}$$

$$\frac{\sin(\theta+90°)}{\sin(\theta+180°)}$$

$$\frac{\sin\theta}{\sin(\theta+90°)}$$

$$\frac{\sin(\theta+90°)}{\sin(\theta+180°)}$$

$$\frac{\sin\theta}{\sin(\theta+90°)}$$

O   45   90   135   180   225   270   315   360   $\theta_E$

FIG. 5

```
                  ┌──────────────┐
                  │    START     │
                  └──────────────┘
                          │
        ┌──────────────────────────────────┐
        │  INTAKE OF V1, V2, AND V3         │  S1
        └──────────────────────────────────┘
                          │
          ┌──────────────────────────────┐
          │  COMPUTATION OF θ₁            │  S2
          └──────────────────────────────┘
                          │
          ┌──────────────────────────────┐
          │  COMPUTATION OF θ₂            │  S3
          └──────────────────────────────┘
                          │
      ┌──────────────────────────────────────┐
      │  COMPUTATION OF ROTATION              │  S4
      │  ANGLE ESTIMATION VALUE θ_E           │
      └──────────────────────────────────────┘
                          │
      ┌──────────────────────────────────────┐
      │  SELECTION OF ONE OF EITHER           │
      │  θ₁ OR θ₂ AS FINAL ROTATION           │  S5
      │  ANGLE θ                              │
      └──────────────────────────────────────┘
                          │
                  ┌──────────────┐
                  │     END      │
                  └──────────────┘
```

Steps:

- S1: INTAKE OF V1, V2, AND V3
- S2: COMPUTATION OF $\theta_1$
- S3: COMPUTATION OF $\theta_2$
- S4: COMPUTATION OF ROTATION ANGLE ESTIMATION VALUE $\theta_E$
- S5: SELECTION OF ONE OF EITHER $\theta_1$ OR $\theta_2$ AS FINAL ROTATION ANGLE $\theta$

FIG. 6

$V1 = \sin\theta$

$V2 = \sin(\theta + \alpha)$
$= \sin(\theta + 90°)$

40

ROTATION ANGLE
COMPUTING DEVICE

41

FIRST ROTATION ANGLE
COMPUTING UNIT

42

SECOND ROTATION
ANGLE COMPUTING UNIT

43

ROTATION ANGLE
SELECTION UNIT

51

ROTATION ANGLE
ESTIMATING UNIT

52

SELECTION UNIT

FIG. 7

START

INTAKE OF V1 AND V2 | S11

COMPUTATION OF $\theta_1$ | S12

COMPUTATION OF $\theta_2$ | S13

COMPUTATION OF ROTATION
ANGLE ESTIMATION VALUE $\theta_E$ | S14

SELECTION OF ONE OF EITHER
$\theta_1$ OR $\theta_2$ AS FINAL ROTATION ANGLE $\theta$ | S15

END

FIG. 8

| 0° | 45° | 90° | 135° | 180° | 225° | 270° | 315° | 360° |
|---|---|---|---|---|---|---|---|---|

(a) $\theta_1$ | $\theta_2$ | $\theta_1$ | $\theta_2$ | $\theta_1$

(b) $\theta_1$ | $\dfrac{\theta_1+\theta_2}{2}$ | $\theta_2$ | $\dfrac{\theta_1+\theta_2}{2}$ | $\theta_1$ | $\dfrac{\theta_1+\theta_2}{2}$ | $\theta_2$ | $\dfrac{\theta_1+\theta_2}{2}$ | $\theta_1$

FIG. 9

70

ROTATION ANGLE COMPUTING DEVICE

$V1=\sin\theta$

71 FIRST ROTATION ANGLE COMPUTING UNIT

$V2=\sin(\theta+\alpha)$

72 SECOND ROTATION ANGLE COMPUTING UNIT

$V3=\sin(\theta+\beta)$

73 THIRD ROTATION ANGLE COMPUTING UNIT

74 FINAL ROTATION ANGLE COMPUTING UNIT

FIG. 1 0

70

71

$$V1 = \sin\theta$$

$$V_{12} = \cos\theta = \frac{V2 - V1 \cdot \cos\alpha}{\sin\alpha}$$

81

$$\theta_1 = \tan^{-1}\frac{V1}{V_{12}}$$

82

72

$$V2 = \sin(\theta + \alpha)$$

$$V_{13} = \cos\theta = \frac{V3 - V1 \cdot \cos\beta}{\sin\beta}$$

91

$$\theta_2 = \tan^{-1}\frac{V1}{V_{13}}$$

92

73

$$V3 = \sin(\theta + \beta)$$

$$V_{23} = \cos\theta' = \frac{V3 - V2 \cdot \cos(\beta - \alpha)}{\sin(\beta - \alpha)}$$

101

$$\theta_3' = \tan^{-1}\frac{V2}{V_{23}}$$

102

$$\theta_3 = \theta_3' - \alpha$$

103

74

$$\theta = \frac{\theta_1 + \theta_2 + \theta_3}{3}$$

24

FIG. 1 1

```
        ( START )
            |
INTAKE OF V1, V2, AND V3 | S21
            |
 COMPUTATION OF θ₁ | S22
            |
 COMPUTATION OF θ₂ | S23
            |
 COMPUTATION OF θ₃ | S24
            |
COMPUTATION OF FINAL
  ROTATION ANGLE θ  | S25
            |
        ( END )
```

FIG. 1 2

## INTERNATIONAL SEARCH REPORT

| | International application No. |
|---|---|
| | PCT/JP2010/064105 |

**A. CLASSIFICATION OF SUBJECT MATTER**
*G01D5/244*(2006.01)i

According to International Patent Classification (IPC) or to both national classification and IPC

**B. FIELDS SEARCHED**

Minimum documentation searched (classification system followed by classification symbols)
G01D5/244

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2004-264167 A (Midori Precisions Co., Ltd.),<br>24 September 2004 (24.09.2004),<br>paragraphs [0013] to [0022]; all drawings<br>(Family: none) | 1-6,9-13<br>7-8 |
| Y<br>A | JP 2008-128961 A (Alps Electric Co., Ltd.),<br>05 June 2008 (05.06.2008),<br>entire text; all drawings<br>& US 2008/0122437 A1    & EP 1925913 A2 | 1-6,9-13<br>7-8 |
| Y | JP 2007-155618 A (Denso Corp.),<br>21 June 2007 (21.06.2007),<br>paragraph [0035]<br>(Family: none) | 5-6,9-13 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 November, 2010 (15.11.10) | 30 November, 2010 (30.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/064105

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2003-240598 A (Asahi Kasei Corp.),<br>27 August 2003 (27.08.2003),<br>paragraphs [0002] to [0010]; fig. 1<br>(Family: none) | 9-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001324321 A
- JP 2004156961 A
- JP 2008241411 A
- JP HEI555022 B
- JP 2002213944 A

- JP HEI9508214 B
- JP 2009195190 A
- JP 2009195191 A
- JP 2010166122 A